# EUROPEAN PATENT SPECIFICATION

(11) **EP 1 438 184 B1**
(45) Date of publication and mention of the grant of the patent: **14.02.2007**
(21) Application number: 02800356.4
(22) Date of filing: 25.09.2002
(51) Int. Cl.: B29D 30/52, B60C 1/00, B60C 11/00

(54) **TIRE WITH EXO-BELT SKIN AND METHOD FOR PRODUCING THE SAME**
REIFEN MIT EXO-GÜRTELHAUT UND VERFAHREN ZU SEINER HERSTELLUNG
PNEU AVEC REVETEMENT A RUBAN EXTERNE ET SON PROCEDE DE PRODUCTION

(30) Priority: 28.09.2001 US 325523 P
(43) Date of publication of application: 21.07.2004
(73) Proprietor: Sweetskinz, Inc., Philadelphia, PA 19130 (US)
(72) Inventor: MELLET, Yann, Philadelphia, PA 19103 (US); DEETZ, Josh, Taiping City, Taiwan 411 (TW)
(74) Representative: Fuchs Mehler Weiss & Fritzsche
(86) International application number: PCT/US2002/030466
(87) International publication number: WO 2003/028988

(56) References cited:
- EP-A- 1 027 982
- WO-A1-01/43958
- JP-A- 4 202 339
- JP-A- 61 146 605
- US-A- 844 820
- US-A- 4 176 702
- US-A- 4 515 541
- US-A- 5 055 347
- US-A- 5 234 326

## Description

### BACKGROUND OF THE INVENTION

The present invention relates to a method of making a tire with a skin covering at least a portion of the outer peripheral surface of the tire and a tire assembly for insertion into a tire mold.

A method of forming pneumatic tires is disclosed in US-patent 844,820. It is directed to a method of forming a tire constructed from a body portion 1 and a tread portion 2. The body and tread portions are formed in a semi-vulcanized state. The body portion is roughened on its outer surface and coated with a rubber cement. The tread portions is placed over the outer surface of the body portion and exposed to hot steam to complete vulcanization and securing of the body portion to the tread portion using the rubber cement.

An other method of producing pneumatic tires is disclosed in EP-applications 1 027 982 A2. It is directed to a process for producing a pneumatic tire including inserting prevulcanized components into a vulcanization mold 2 and applying pressure P and heat to the mold and components to fully mold the components together. The tire components include a partial tire 1, a tread 3 and sidewall strips 4.

The present invention relates generally to improvements of the known methods and to tire enhancement and, more particularly, to a tire having a exo-belt cover or skin incorporated into at least a portion of the peripheral surface thereof.

### BRIEF SUMMARY OF THE INVENTION

Briefly stated, the present invention comprises a method of making a tire with a skin covering at least a portion of the outer peripheral surface of the tire. The method comprises the steps of: providing a partially cured tire; providing a partially cured skin; installing the partially cured tire and the partially cured skin in a tire mold with the skin engaging and covering at least a portion of an outer surface of the tire and with the skin facing an inner surface of the mold; applying heat and pressure to the tire to press the skin and the tire against the inner surface of the mold; and maintaining the heat and pressure for a predetermined time period to vulcanize and bond together the tire and the skin.

The present invention further comprises a tire assembly. The tire assembly includes a partially cured tire formed of a first predetermined rubber composition. A partially cured skin is formed of a second predetermined rubber composition. The second predetermined rubber composition is substantially the same as the first predetermined rubber composition. The partially cured skin is at least slightly larger than the partially cured tire and surrounds and engages at least a portion of the outer periphery of the partially cured tire. The partially cured tire and the partially cured skin are cured together as a single unit to bond the skin to the tire to form the tire assembly.

### BRIEF DESCRIPTION OF THE SEVERAL VIEWS OF THE DRAWINGS

The following detailed description of preferred embodiments of the invention will be better understood when read in conjunction with the appended drawings. For the purpose of illustrating the invention there are shown in the drawings embodiments which are presently preferred. It should be understood, however, that the invention is not limited to the precise arrangements and instrumentality shown.

In the drawings:

Fig. 1 is a perspective view of a cover or skin for a tire in accordance with a preferred embodiment of the present invention;

Fig. 2 is an enlarged perspective view of a portion of a bicycle tire showing the skin of Fig. 1 applied thereto;

Fig. 3 is a fragmentary top plan view of a skin for a tire in accordance with a first alternative embodiment of the present invention;

Fig. 4 is a fragmentary top plan view of a portion of a partially cured standard bicycle tire;

Fig. 5 is a sectional view of a partially cured bicycle tire illustrating the initial stage of application of the skin of Fig. 3; and

Fig. 6 is a sectional view of a rim-mounted bicycle tire with the skin applied thereto.

### DETAILED DESCRIPTION OF THE INVENTION

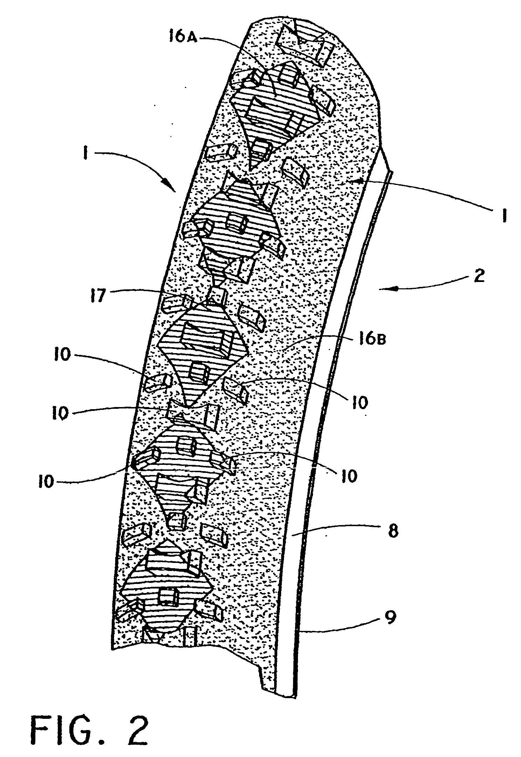

The present invention relates to a base tire or tire 2 having an exo-belt skin or skin 1 which is applied to the external surface thereof, as described more fully herein below. In the present embodiment, a standard or specialty bicycle tire 2 is shown in Figs. 2, 4 and 5 to illustrate the invention. It should be understood, however, that the skin 1 could be applied to other types of tires including other types of bicycle tires, motorcycle tires, automobile tires or any other circumferential type of tire, if desired. It is the primary intention of the skin 1, to enhance the visual interest or appeal of the tire 2 and to improve wear and performance, however, other advantages of having the skin 1 on a tire 2 will hereinafter become apparent.

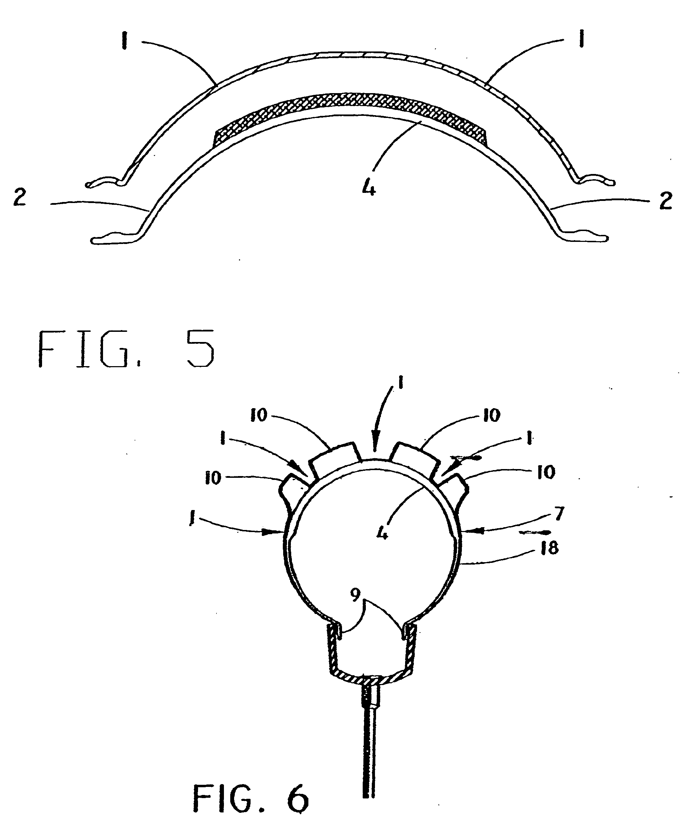

As best shown in Figs. 5 and 6, the base (partially cured) tire or tire 2 (shown in radial cross-section) has a circumferential ply or base 4 with an outer circumferential surface 6, a pair of spaced apart annular side walls 8 at the distal ends of the base 6, a pair of rim engaging annular beads 9 on the distal ends of the side walls 8, and a tread pattern extending along the outer circumferential surface 6. The tread pattern of the present embodiment includes a plurality of spaced tread members 10, each of which extend radially outwardly from the outer circumferential surface 6 of the base 4. The specific tread pattern for a particular tire will vary depending upon the style and type of tire and some tires may not include a tread pattern at all. In addition, the number of plies of the tire 2 may vary to include multiple plies such as 3 ply, 4 ply, 5 ply, 6 ply, etc., in some applications. Bicycle tires of the type illustrated by Fig. 5 are typically formed utilizing a rubber mixture containing about 75% by weight of natural rubber and about 25% by weight of synthetic rubber. However, the percentages of the natural rubber and synthetic rubber of the mixture may vary in particular applications. In addition, in the case of some bicycle tires, reinforcing fibers may be added to the rubber mixture to improve performance. Typically, when such reinforcing fibers are added to the mixture, the mixture is referred to as a "3D compound". The reinforcing fibers may comprise any suitable fiber, preferably monofilament fiber, such as Kevlar®, which may be crushed and mixed into the rubber mixture. Typically, such 3D compounds include approximately 3% by weight of the rubber mixture. However, the percentage of reinforcing fibers in the 3D compound may be less than or greater than 3% for particular applications.

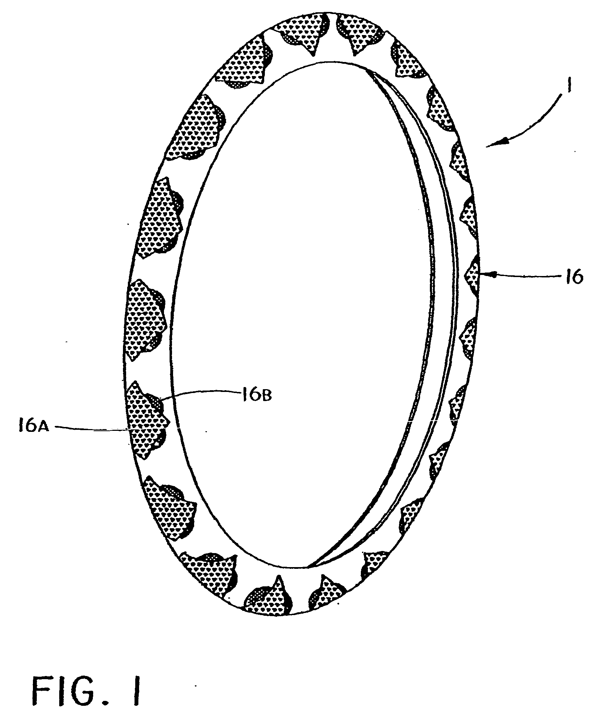

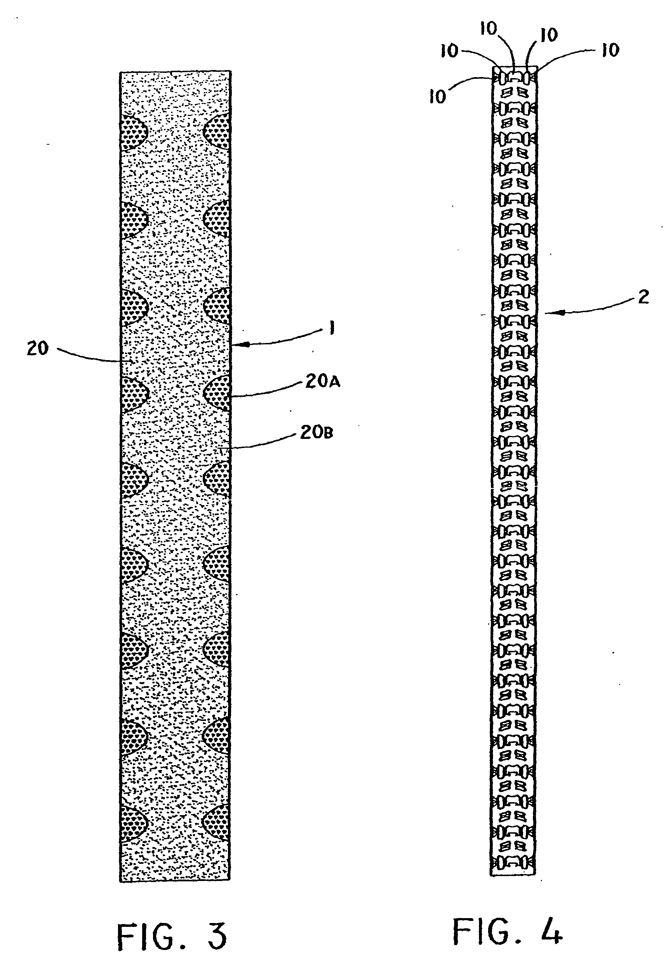

As shown in Figs. 1-3, 5 and 6, the present invention comprises a skin 1, which is adapted to be permanently installed upon or applied to at least a portion of the outer periphery of a base tire 2. In the preferred embodiment, as best shown in Fig. 3, the skin 1 is generally comprised of an elongated belt or strip which is substantially the same length as the circumferential dimension of the outer circumferential surface 6 of the tire 2. However, the skin 1 could have a length which is greater than the circumference of the outer circumferential surface 6 of the tire 2. The length will be determined by the aesthetic and performance characteristics one wishes to impart to the tire 2 through the use of the skin 1. For example, the skin 1 of the preferred embodiment, shown in Fig. 3, wherein the skin 1 is a belt or strip, enhances aesthetic and visual as well as the performance characteristics of the tire 2 around the entire circumference of the tire 2. In an alternative embodiment, best shown in Fig. 1, the skin 1 is a continuous loop which enhances both the aesthetic and performance characteristics of the entire tire 2. It is also contemplated that the skin 1 may be for covering only a segment of the tire 2 to achieve desired characteristics for the tire 2.

The skin 1 of the preferred embodiment preferably has a width that encompasses the entire width of the tread pattern and each side wall 8 of the tire 2 extending from one bead 9 to the other bead 9. In other words, it is preferred that the entire exposed outer peripheral surface of the tire 2 be covered by the skin 1. It is contemplated, however, that the width of the skin 1 may be less than that of the preferred embodiment. For example, the skin 1 could be configured to overlie and cover at least a portion of only one of the side walls 8 of the tire 2 or just the tread members 10 and outer circumferential surface 6 of the tire 2 (and not the side walls 8). Again, the width of the skin 1 will depend on the visual and performance characteristics one would like to impart to the tire 2. Since one of the functions of the skin 1 is decorative, the width of the skin 1 and the portions of the tire 2 on which the skin 1 is applied will be determined by the visual effect to be created. The decorative function of the skin 1 will be discussed more fully below.

Additional factors to be considered in determining the length and width of the skin 1 are the added weight and cost of the skin 1. Inasmuch as rotational weight, particularly at the outer circumference of a tire, dramatically increases the amount of work required to increase the rotational speed of the tire, minimizing the rotational weight is important to overall tire performance. Accordingly, the skin 1 must be carefully tailored to balance between the added tire weight and the aesthetic and performance purposes and visual effect sought to be achieved. Whereas in the preferred embodiment, the skin 1 is intended to enhance the aesthetic characteristics of the tire 2 around the entire outer periphery of the tire 2, one may desire that the visual aesthetic characteristics be more locally limited on the outer circumferential surface 6 and tread members 10 of the tire 2.

As best shown in Figs. 1 and 3 the skin 1 preferably has visual characteristics that extend throughout at least some portion of the skin 1. More preferably, the visual characteristics could extend throughout the entire surface of the skin 1. Preferably, the skin 1 extends from the base 4 to embrace the entire outer periphery of the tire 2 including the outer circumferential surface 6 and the entire surface of each of the tread members 10. The skin 1 preferably extends the entire length of the tread members 10, including the end portion, so as to completely cover the entire periphery of each tread member 10 once the skin 1 has been applied to the tire 2.

The skin 1 which, before being applied to the base tire 2 is in a green or partially cured state, is made of a composite rubber mixture, preferably a blend of about 25% synthetic rubber, such as styrene-butadiene rubber and about 75% natural rubber. Preferably, the composition of the skin 1 is the same as or similar to the composition of the base tire 2 to which the skin 1 is applied. In this manner, bonding between the skin 1 and the base tire 2 is enhanced. Additionally, a combination of rubber and a polymeric material could be used. Other materials known to those skilled in the art could be used, if desired. In the present invention, reinforcing fibers are added to the skin 1 to enhance performance. The reinforcing fibers are of the mono-filament type, such as Kevlar® and are crushed and mixed into the rubber mixture. The reinforcing fibers could comprise between 1-12% by weight of the rubber mixture but preferably comprise about 8% of the mixture. The material(s) elected must provide both durability and light weight to the skin 1 and be such that the skin 1 will bond to the tires during production. Preferably the skin 1 is limited in thickness to that which is sufficient to permit effective transfer and retention of the desired image onto the desired portion of the outer periphery of the tire 2 and provide the desired performance characteristics. However, it is also contemplated that the skin 1 be constructed of a substantial thickness so as to help protect the tire 2 from wear and abrasions.

In some applications, at least the exposed outer surface of the skin 1 could be coated with a protective coating (not shown) to protect the skin 1 from the effects of wear and abrasion both following manufacture (in transport, etc.) and during use. Preferably the protective coating is urethane, but it is contemplated that the protective coating could be any transparent or translucent, durable, flexible material with sufficient bonding characteristics to adhere to the skin 1 under the conditions of anticipated use. Preferably, the protective coating selected also provides protection to the skin 1 from ultraviolet light and the like.

As best shown in Figs. 1 and 2, the skin 1 includes a decorative pattern 16 which may be a pattern incorporating the trade dress of a particular manufacturer, retailer or the like (not shown) or some other pattern such as a snake skin pattern and/or other natural or non-natural patterns or the like (not shown), as examples. The decorative pattern 16 may comprise virtually any pattern or simply one or more solid colors. To enhance the safety and aesthetic characteristics of the tire 2, the decorative pattern 16 may include a phosphorescent material 17, as shown in Fig. 2, applied in a pattern such as stripes as shown in Fig. 2, or as a solid color as shown in Fig. 1. The decorative pattern 16 may also include reflective or retro-reflective particles or beads such as Scotchlite® from 3M to enhance the visual and safety aspects of the tire 2. It should be understood that the decorative pattern 16 can be incorporated on or into the skin 1 itself, or into the protective coating (not shown), or both. The retro-reflective material could be added to the rubber composition of the skin 1 and/or could be applied to the ink used to form the decorative pattern of the skin 1. The decorative pattern 16 could also include specifically directed advertising related or unrelated to the tire 2, bicycle (not shown) or the like. The decorative pattern 16 may be comprised of a plurality of discrete decorative patterns 16a, 16b, as shown in Figs. 1 and 2. The decorative pattern 16 need not be distributed over the entire skin 1, but may be distributed over only a portion of the skin 1. For example, a portion of the decorative pattern 16 could be located only on the portion of the skin 1 that overlies the side walls 8 of the tire 2.

The decorative pattern 16 is visible on at least a portion of the peripheral surface of the skin 1, *i.e.,* it is applied to the surface of the skin 1. Preferably, the skin 1 is produced with the intended colored design printed thereon. Alternatively, it is to be understood that the decorative pattern could be embedded within a portion of the skin 1.

The skin 1 may be made by any of several methods well known to those skilled in the art. Most preferably, the skin 1 is made by creating a thin sheet of rubber composition material (not shown) which is partially cured. Preferably, the skin 1 will have a thickness in the range of 0.5 to 1 millimeter and more preferably is in the range of .5mm to .75mm. Preferably, a membrane (not shown) is applied to one side of the skin 1 to enable the skin 1 to be handled more easily. It should be understood that the use of a membrane for handling is not necessary. The decorative pattern 16 is printed on the skin 1 using any of a number of techniques known to those skilled in the art, but preferably is printed using offset and other known printing techniques which are well-known. Preferably the ink applied to the skin 1 is sufficiently rubberized or flexible to be able to withstand the rigors of tire use, including expansion during inflation and flexure during use based on the cycle of alternate tension/compressive stresses created on the tire during normal use.

In an alternative embodiment, at least some of the three dimensional tread members 10 will be positioned on the outer circumferential surface 6 in a pattern that will correspond in theme or design to the design printed two dimensionally to the skin 1. In a further alternative embodiment, at least some of the tread members 10 will be shaped to correspond in theme or design to the design printed on the skin 1. It is contemplated that the tread members 10 may be both shaped and positioned so to correspond in design or theme to the design printed on the skin 1.

The skin 1 is applied to the base tire 2 during the tire manufacturing process. As stated above, the skin 1 is in a partially cured, green state at the time it is constructed. The skin 1 is applied to the tire 2 when the tire 2 is also in a green or partially cured state and the tire 2 and skin 1 are thereafter fully cured (vulcanized) together to form an assembled whole. The molding equipment used for curing the tire 2 and skin 1 is conventional equipment used during tire manufacture and well known to those skilled in the art. Other equipment and/or methods may be employed to secure the skin1 to the base tire 2. Preferably a BOM vertical mold is used but other molds such as a toroidal clam shell mold or the like could be used, if desired. Preferably, the partially cured skin 1 and the partially cured base tire 2 are placed in the mold and thereafter the expandable interior mold bladder is expanded using steam or other such pressure to cause the skin 1 and the base tire 2 to expand into the mold with the skin 1 facing the inner surface of the mold. Further expansion of the mold bladder causes the skin 1 and base tire 2 to conform to the inner surface of the mold thereby creating the desired tire shape, texture and tread pattern. The bladder is retained in place by the pressure for a predetermined time period during which the tire 1 and the skin 2 are fully cured or vulcanized by heat and pressure transmitted to the bladder via steam or other well known methods. Preferably, the outer surface of the mold is also heated in a manner known to those skilled in the art to enhance curing of the combined skin 1 and base tire 2 and to prevent undercuring or overcuring of the tire 2 or skin 1.

Preferably, the skin 1 is initially positioned in the mold so that upon expansion of the mold bladder, the pattern of the skin 1 is in proper registry with the tread pattern imparted to the skin land base tire 2 by the inner surface of the mold. It will be recognized by those skilled in the art that the skin 1 will, through the curing process, become fused or bonded to the base tire 2 due to the combination of both the skin 1 and tire 2 and the final curing process. Thus, when the partially cured tire 2 and partially cured skin 1 are subjected to the remainder of the curing process to which a tire 2 is normally subjected and which is well known to those skilled in the art the skin 1 becomes part of the tire 2. The bonding of the base tire 2 and the skin 1 is enhanced due to the composition of the skin 1 being the same as or similar to the composition of the base tire 2. It is also preferred that the skin 1 is applied prior to fully curing the tire 2 to help avoid a costly double cure process and to create a permanent bond between the skin 1 and the tire 2 so that the visual characteristics of the tire remain aligned with or in registry with the tire 2 in both the circumferential and axial directions. It should be understood, however, that for some applications, the skin 1 may be applied to the tire 2 after the tire 2 is fully cured using an adhesive or some other direct or intermediate bonding agent or process.

As shown in Fig. 3, the external surface 18 of the skin 1 may include a surface texture 20 for improving adhesion between the skin 1 and the trail and/or road surface(s) to which the skin 1 is exposed when on a tire 2. The surface texture could be imparted by the mold during the curing process or could be created by adding a textured material to the rubber composition of the skin 1. The primary effect of the surface texture 20, which will preferably cover portions of or the entire surface of the tread members 10 as well as lie within the interstitial region between the tread members 10 and the sides of the tread members 10, is to enhance the ability of the tire 2 to grip trail and/or road surfaces, to shed mud, and/or to channel water away from the tire 2. As shown in Fig. 3, the surface texture 20 may include a plurality of different textures 20a, 20b, or the surface texture 20 may encompass only a single texture (not shown). The surface texture 20 may be made up of virtually any combination of bumps, knobs, depressions, ridges, etc. that will provide a gripping, mud shedding, or water channeling characteristic to the skin 1. As will be recognized by those skilled in the art the surface texture 20 may also serve to enhance the aesthetic characteristics of the tire 2.

Again, it should be noted that the skin 1 is intended to cover the tread members 10 in their entirety, as contrasted to prior techniques for decorating tires, such as that disclosed in U.S. Patent No. 5,904,794, which is incorporated herein in its entirety by reference. This is advantageous not only for improving the aesthetics of the tire 2 of the present invention over the prior art by permitting the skin 1 to cover all or substantially visual surfaces of the tire 2, but also permits the design to incorporate the tread members 10 into, for example, a pattern matching the decorative pattern 16 or surface texture 20 into image specific treads. Additionally, covering the tread members 10 with the skin 1 can cause the skin 1 to serve as a reinforced exo belt which also improves the performance and wear resistance of the tire 2 over prior art designs particularly if the reinforcing fibers have been used to form the skin 1.

It will be appreciated by those skilled in the art that changes could be made to the embodiment described above without departing from the invention as claimed. It should also be understood that the above description was directed to a bicycle tire 2 for purposes of providing one example of the types of tires to which the present invention may be applied. It is clearly contemplated that the present invention may be applied to any type of tire, including, but not limited to, all types of bicycle tires including sew-ups, tubeless and clincher tires, in addition to motorcycle tires, automobile tires, heavy equipment tires, etc. It is understood, therefore, that this invention is not limited to the particular embodiments disclosed, but is intended to cover all modifications within the scope of the invention.

## Claims

1. A method of making a tire with a skin covering at least a portion of the outer peripheral surface of the tire comprising the steps of:
(a) providing a partially cured base tire (2);
(b) providing a partially cured skin (1) including a predetermined percentage by weight of crushed reinforcing fiber comprised of a mono-filament aramid fiber material;
(c) printing a decorative pattern (16) onto an entire exposed surface of the partially cured skin (1)
(d) installing the partially cured base tire (2) and the partially cured skin (1) in a tire mold with the skin (1) engaging and covering at least a portion of an outer surface of the base tire (2) and with at least one of the skin (1) and decorative pattern (16) facing an inner surface of the mold, the decorative pattern (16) being positioned at a predetermined location;
(e) applying heat and pressure to the base tire (2) to press the skin (1) and the base tire (2) against the inner surface of the mold;
(f) maintaining the heat and pressure for a predetermined time period to vulcanize and bond together the base tire (2) and the skin (1), thereby forming the tire, the decorative pattern (16) being visible on at least a portion of an external peripheral surface of the tire; and
(g) applying one of a transparent and translucent protective coating over the external peripheral surface of the tire.

2. The method as recited in claim 1 further comprising the steps of heating an outer surface of the mold during the predetermined time period to promote the vulcanization and bonding together of the base tire (2) and the skin (1).

3. The method as recited in claim 1, wherein the predetermined pattern is formed, at least in part, by a retro-reflective material and the protective coating is a urethane material.

4. The method as recited in claim 1, wherein the mold is a vertical press mold.

5. The method as recited in claim 4, wherein the heat and pressure are applied by an expandable bladder which engages and presses against the partially cured base tire (2).

6. The method as recited in claim 1, wherein the partially cured base tire (2) and the partially cured skin (1) have the same rubber based composition.

7. The method as described in claim 1, wherein the predetermined percentage of reinforcing fiber is less than 12 %.

8. The method as recited in claim 1 wherein the skin (1) engages and covers the entire outer surface of the base tire (2) in step (d).

9. The method as recited in claim 1, wherein the decorative pattern (16) printed onto the partially cured skin (1) in step (c) is a desired image.

10. The method as recited in claim 1, wherein the decorative pattern (16) printed onto the partially cured skin (1) in step (c) is comprised, at least in part, of an advertisement.

11. The method as recited in claim 1, wherein the decorative pattern (16) is printed onto the partially cured skin (1) in step (c) using an offset printing technique.

12. The method as recited in claim 1, wherein the decorative pattern (16) is printed onto the partially cured skin (1) in step (c) using a flexible ink.

13. A tire assembly for insertion into a tire mold, the tire asembly comprising:
a partially cured base tire (2) formed of a first predetermined rubber composition, the partially cured base tire (2) including a plurality of spaced tread member (10); and
a partially cured skin (1) formed of a second predetermined rubber composition, the second predetermined rubber composition being substantially the same as the first predetermined rubber composition, the skin (1) including a predetermined percentage of reinforcing fiber comprised of a crushed mono-filament aramid fiber material, the skin (1) including a predetermined pattern (16), the partially cured skin (1) being radially larger than the partially cured base tire (2) and surrounding and engaging at least a portion of the outer periphery of the partially cured base tire (2), the partially cured skin (1) surrounding and engaging an entire tread surface of at least one of the plurality of spaced tread members (10), the partially cured base tire (2) and the partially cured skin (1) being insertable into the tire mold together, the predetermined pattern (16) being visible on at least a portion of an external peripheral surface of the tire assembly.

14. The tire assembly as recited in claim 13, wherein the skin (1) is located with respect to the base tire (2) so that the predetermined pattern (16) is at a predetermined location to provide for a pattern specific tread pattern such that the plurality of spaced tread members (10) are one of shaped and positioned to correspond in one of theme and design to the predetermined pattern (16).

15. The tire assembly as recited in claim 13, wherein the predetermined pattern (16) includes a retro-reflecting material.

16. The tire assembly as recited in claim 13 wherein the predetermined pattern (16) is a printed on pattern.

17. The tire assembly as recited in claim 13, wherein the rubber composition of the skin (1) includes a retro-reflective material therein.

18. The tire assembly as recited in claim 13, wherein the predetermined pattern (16) is embedded within the skin (1).

19. The tire assembly as recited in claim 13, wherein the partially cured skin (1) engages the entire outer surface of the partially cured base tire (2).

20. The tire assembly as recited in claim 16, wherein the printed on pattern (16) is printed onto the partially cured skin (1) using a flexible ink.

## Patentansprüche

1. Verfahren zur Herstellung eines Reifens mit einer Haut, die wenigstens einen Teil der äußeren Umfangsfläche des Reifens bedeckt, umfassend die Schritte:
(a) Bereitstellen eines teilweise ausgehärteten Basisreifens (2);
(b) Bereitstellen einer teilweise ausgehärteten Haut (1), die einen vorbestimmten prozentualen Gewichtsanteil zerkleinerter Verstärkungsfaser, umfassend ein monofilamentes Aramidfasermaterial, beinhaltet;
(c) Drucken eines dekorativen Musters (16) auf die vollständig exponierte Oberfläche der teilweise ausgehärteten Haut (1);
(d) Einsetzen des teilweise ausgehärteten Basisreifens (2) und der teilweise ausgehärteten Haut (1) in eine Reifenform, wobei die Haut (1) wenigstens einen Teil einer Außenfläche des Basisreifens (2) bedeckt und dort anliegt und zumindest die Haut (1) und/oder das dekorative Musters (16) der Innenoberfläche der Form zugewandt ist und das dekorative Muster (16) in einer vorbestimmten Lage positioniert ist;
(e) Anwenden von Hitze und Druck auf den Basisreifen (2), um die Haut (1) und den Basisreifen (2) gegen die Innenoberfläche der Form zu drücken;
(f) Aufrechterhalten der Hitze und des Druckes für einen vorbestimmten Zeitraum, um den Basisreifen (2) und die Haut (1) zu vulkanisieren und zusammenzufügen und **dadurch** den Reifen auszuformen, wobei das dekorative Muster (16) auf wenigstens einem Teil einer externen Umfangsfläche des Reifen sichtbar ist; und
(g) Anbringung von einer transparenten und transluzenten Schutzbeschichtung über die äußere Umfangsfläche des Reifens.

2. Verfahren nach Anspruch 1, darüber hinaus umfassend den Verfahrensschritt der Erwärmung einer Außenoberfläche der Form während des vorbestimmten Zeitraums, um die Vulkanisation und das Zusammenfügen des Basisreifens (2) und der Haut (1) zu fördern.

3. Verfahren nach Anspruch 1, bei dem das vorbestimmte Muster wenigstens in Teilen von einem retro-reflektierenden Material gebildet ist und die Schutzschicht ein Urethanmaterial ist.

4. Verfahren nach Anspruch 1, bei dem die Form eine vertikale Pressform ist.

5. Verfahren nach Anspruch 4, bei dem die Hitze und der Druck von einem dehnbaren Heizbalg appliziert werden, der gegen den teilweise ausgehärteten Basisreifen (2) drückt und dort anliegt.

6. Verfahren nach Anspruch 1, bei dem der teilweise ausgehärtete Basisreifen (2) und die teilweise ausgehärtete Haut (1) dieselbe auf Gummi basierende Mischung aufweisen.

7. Verfahren nach Anspruch 1, bei dem der vorbestimmte prozentuale Anteil von Verstärkungsfasern kleiner als 12% ist.

8. Verfahren nach Anspruch 1, bei dem die Haut (1) die vollständige Außenoberfläche des Basisreifens (2) im Verfahrensschritt (d) bedeckt und dort anliegt.

9. Verfahren nach Anspruch 1, bei dem das dekorative Muster (16), welches auf der teilweise ausgehärteten Haut (1) im Verfahrensschritt (c) aufgedruckt ist, einem gewünschtes Bild entpricht.

10. Verfahren nach Anspruch 1, bei dem das dekorative Muster (16), das auf die teilweise ausgehärtete Haut (1) im Verfahrensschritt (c) aufgedruckt ist, wenigstens teilweise eine Werbung umfasst.

11. Verfahren nach Anspruch 1, bei dem das dekorative Muster (16) auf die teilweise ausgehärtete Haut (1) im Verfahrensschritt (c) unter Anwendung einer Offset-Printtechnik aufgedruckt ist.

12. Verfahren nach Anspruch 1, bei dem das dekorative Muster (16) auf die teilweise ausgehärtete Haut (1) im Verfahrensschritt (c) unter Anwendung einer flexiblen Druckfarbe aufgedruckt ist.

13. Reifenaufbau zum Einsatz in eine Reifenform, wobei der Reifenaufbau umfasst:
einen teilweise ausgehärteten Basisreifen (2), der aus einer ersten vorbestimmten Gummimischung geformt ist und der eine Vielzahl von voneinander beabstandeten Reifenprofilteilen (10) beinhaltet; und
eine teilweise ausgehärtete Haut (1), die aus einer zweiten vorbestimmten Gummimischung geformt ist, wobei die zweite vorbestimmte Gummimischung im wesentlichen dieselbe wie die erste vorbestimmte Gummimischung ist, wobei die Haut (1) einen vorbestimmten prozentualen Anteil von Verstärkungsfasern beinhaltet, die aus einem zerkleinerten monofilamenten Aramidfaser-Material besteht, die Haut (1) ein vorbestimmtes Muster (16) beeinhaltet, die teilweise ausgehärtete Haut (1) radial größer als der teilweise ausgehärtete Basisreifen (2) ist und wenigstens einen Teil der Außenumfang des teilweise ausgehärteten Basisreifens (2) umgibt und dort anliegt, wobei die teilweise ausgehärtete Haut (1) die vollständige Reifenprofiloberfläche und wenigstens eine Vielzahl der voneinander beabstandeten Reifenprofilteilen (10) umgibt und dort anliegt, der teilweise ausgehärtete Basisreifen (2) und die teilweise ausgehärtete Haut (1) in die Reifenform zusammen einsetzbar sind, und das vorbestimmte Muster (16) auf wenigstens einem Teil einer äußeren Umfangsfläche des Reifenaufbaus sichtbar ist.

14. Reifenaufbau nach Anspruch 13, bei dem die Haut (1) in Bezug auf den Basisreifen (2) so angeordnet ist, dass das vorbestimmte Muster (16) sich an einer vorbestimmten Stelle befindet, um ein musterspezifisches Reifenprofilmuster zu bieten, so dass eine Vielzahl von voneinander beabstandeten Reifenprofilteilen (10) entweder so geformt oder positioniert sind, um mit einem Thema und Design des vorbestimmten Musters (16) zu korrespondieren.

15. Reifenaufbau nach Anspruch 13, bei dem das vorbestimmte Muster (16) ein retro-reflektierendes Material beinhaltet.

16. Reifenaufbau nach Anspruch 13, bei dem das vorbestimmte Muster (16) auf Muster gedruckt ist.

17. Reifenaufbau nach Anspruch 13, bei dem die Gummimischung der Haut (1) ein retro-reflektierendes Material beeinhaltet.

18. Reifenaufbau nach Anspruch 13, beim dem das vorbestimmte Muster (16) innerhalb der Haut (1) eingebettet ist.

19. Reifenaufbau nach Anspruch 13, bei dem die teilweise ausgehärtete Haut (1) an der gesamten Außenfläche des teilweise ausgehärteten Basisreifens (2) anliegt.

20. Reifenaufbau nach Anspruch 16, bei dem das aufgedruckte Muster (16) auf die teilweise ausgehärtete Haut (1) unter Verwendung einer flexiblen Druckfarbe aufgedruckt ist.

## Revendications

1. Procédé pour fabriquer un pneu avec un revêtement recouvrant au moins une partie de la surface périphérique externe du pneu comprenant les étapes consistant à :
a) fournir un pneu de base partiellement durci (2) ;
b) fournir un revêtement partiellement durci (1) comprenant un pourcentage en poids prédéterminé d'une fibre de renfort pressée, constituée d'un matériau en fibre d'aramide monofilament ;
c) imprimer un motif décoratif (16) sur la totalité d'une surface exposée du revêtement partiellement durci (1) ;
d) placer le pneu de base partiellement durci (2) et le revêtement partiellement durci (1) dans un moule pour pneu avec le revêtement (1) venant au contact et recouvrant au moins une partie de la surface externe du pneu de base (2) et avec au moins un des revêtements (1) et des motifs décoratifs (16) tournés vers une surface interne du moule, le motif décoratif (16) étant positionné à un emplacement prédéterminé ;
e) exposer le pneu de base à la chaleur et à la pression (2) pour presser le revêtement (1) et le pneu de base (2) contre la surface interne du moule ;
f) maintenir la chaleur et la pression pendant un certain laps de temps prédéterminé de façon à vulcaniser et souder l'un à l'autre le pneu de base (2) et le revêtement (1), de manière à former le pneu, le motif décoratif (16) étant visible sur au moins une partie de la surface périphérique externe du pneu ; et
(g) appliquer un revêtement transparent et translucide de protection sur la surface périphérique externe du pneu.

2. Procédé selon la revendication 1 comprenant en outre les étapes consistant à chauffer la surface externe du moule durant le laps de temps prédéterminé pour favoriser la vulcanisation et le soudage l'un à l'autre du pneu de base (2) et du revêtement (1).

3. Procédé selon la revendication 1, **caractérisé en ce que** le motif prédéterminé est formé, au moins en partie, par une matière rétroréfléchissante et le revêtement de protection est une matière uréthane.

4. Procédé selon la revendication 1, **caractérisé en ce que** le moule est un moule de presse vertical.

5. Procédé selon la revendication 4, **caractérisé en ce que** la chaleur et la pression sont appliquées par une vessie dilatable qui vient au contact et exerce une pression sur le pneu de base partiellement durci (2).

6. Procédé selon la revendication 1, **caractérisé en ce que** le pneu de base partiellement durci (2) et le revêtement partiellement durci (1) ont la même composition à base de caoutchouc.

7. Procédé selon la revendication 1, **caractérisé en ce que** le pourcentage prédéterminé de fibre de renfort est inférieur à 12 %.

8. Procédé selon la revendication 1, **caractérisé en ce que** le revêtement (1) vient au contact et recouvre la totalité de la surface externe du pneu de base (2) à l'étape (d).

9. Procédé selon la revendication 1, **caractérisé en ce que** le motif décoratif (16) imprimé sur le revêtement partiellement durci (1) à l'étape (c) est une image voulue.

10. Procédé selon la revendication 1, **caractérisé en ce que** le motif décoratif (16) imprimé sur le revêtement partiellement durci (1) à l'étape (c) est constitué, au moins en partie, d'une annonce publicitaire.

11. Procédé selon la revendication 1, **caractérisé en ce que** le motif décoratif (16) est imprimé sur le revêtement partiellement durci (1) à l'étape (c) en utilisant une technique d'impression offset.

12. Procédé selon la revendication 1, **caractérisé en ce que** le motif décoratif (16) est imprimé sur le revêtement partiellement durci (1) à l'étape (c) en utilisant une encre flexible.

13. Ensemble pneu pour l'insertion dans un moule pour pneu, l'ensemble pneu comprenant :
un pneu de base partiellement durci (2) formé d'une première composition de caoutchouc prédéterminée, le pneu de base partiellement durci (2) comprenant une pluralité d'éléments espacés sur la bande de roulement (10) ; et un revêtement partiellement durci (1) formé d'une seconde composition de caoutchouc prédéterminée, la seconde composition de caoutchouc prédéterminée étant sensiblement identique à la première composition de caoutchouc prédéterminée, le revêtement (1) comprenant un pourcentage prédéterminé de fibre de renfort constituée d'une matière en fibre d'aramide monofilament pressée, le revêtement (1) comprenant un motif prédéterminé (16), le revêtement partiellement durci (1) étant radialement plus large que le pneu de base partiellement durci (2) et entourant et venant au contact d'au moins une partie du pourtour du pneu de base partiellement durci (2), le revêtement partiellement durci (1) entourant et venant au contact de la totalité de la bande de roulement d'au moins un de la pluralité des éléments espacés sur la bande de roulement (10), le pneu de base partiellement durci (2) et le revêtement partiellement durci (1) pouvant être insérés ensemble dans le moule pour pneu, le motif prédéterminé (16) étant visible sur au moins une partie de la surface périphérique externe de l'ensemble pneu.

14. Ensemble pneu selon la revendication 13, **caractérisé en ce que** le revêtement (1) est positionné par rapport au pneu de base (2) de façon à ce que le motif prédéterminé (16) soit positionné à un endroit prédéterminé afin d'assurer un motif particulier de la bande de roulement tel que la pluralité d'éléments espacés sur la bande de roulement (10) ont une forme et une position qui correspondent au thème et au dessin du motif prédéterminé (16).

15. Ensemble pneu selon la revendication 13, **caractérisé en ce que** le motif prédéterminé (16) comprend une matière rétro-réfléchissante.

16. Ensemble pneu selon la revendication 13, **caractérisé en ce que** le motif prédéterminé (16) est un motif imprimé.

17. Ensemble pneu selon la revendication 13, **caractérisé en ce que** la composition de caoutchouc (1) comprend une matière rétro-réfléchissante.

18. Ensemble pneu selon la revendication 13, **caractérisé en ce que** le motif prédéterminé (16) est incorporé au revêtement (1).

19. Ensemble pneu selon la revendication 13, **caractérisé en ce que** le revêtement partiellement durci (1) vient au contact de la totalité de la surface externe du pneu de base partiellement durci (2).

20. Ensemble pneu selon la revendication 16, **caractérisé en ce que** le motif imprimé (16) est imprimé sur le revêtement partiellement durci (1) en utilisant une encre flexible.
